# EUROPEAN PATENT APPLICATION

(11) **EP 2 911 040 A1**
(43) Date of publication of application: **26.08.2015**
(21) Application number: 15154428.5
(22) Date of filing: 10.02.2015
(51) Int. Cl.: G06F 3/01, G06F 3/0484, G06T 19/00, G06F 3/0481, G06T 15/00, G06T 15/50

(54) **Method and device for controlling a scene comprising real and virtual objects**

(30) Priority: 25.02.2014 FR 1451481
(71) Applicant: Thomson Licensing, 92130 Issy-les-Moulineaux (FR)
(72) Inventor: Denis, Bernard, 35576 Cesson Sevigne cedex (FR); Mollet, Nicolas, 35576 Cesson Sevigne cedex (FR); Dumas, Olivier, 35576 Cesson Sevigne cedex (FR)
(74) Representative: Huchet, Anne

(57) **Abstract**

The invention relates to a device for controlling (2) an environment composed from at least one virtual object (11) calculated in real time and from at least one real object (10, 101 to 103). The device comprises a display screen (21) for displaying the composite environment according to an item of information representative of location of the device (2); first interaction means for selecting at least one object of the composite environment and second interaction means for adjusting at least one setting parameter associated with the at least one selected object.

## Description

### 1. Technical field.

The present disclosure relates to the field of environments combining real and virtual objects and more specifically to the display and to the setting of the parameters of an environment composed from real and virtual objects.

### 2. Background.

It is known to use a virtual camera such as the "SimulCam" to film scenes taking place in virtual worlds, such a virtual camera making it possible to project oneself into the virtual world and to view in real time the characters and scenery from synthesised images. These cameras are used to frame the scenes, whether virtual or real/virtual composite, in real time. However, if the user wishes to modify elements of the film set, whether real (for example the lights) or virtual (virtual lights, graphical content), this is done manually and unintuitively. This user must in fact indicate to the operators which elements must be modified and how. And given the large number of elements (lighting, scenery, etc.) which it is possible to modify, it is often complex to designate them precisely and to retain the consistency of the composite scene when a parameter of an element of the virtual world (or conversely of the real world) is modified. For example, the modification of a lighting parameter of an element of the real world (for example a spotlight) modifies the lighting of the scene. So that the lighting of the virtual objects of the scene remains consistent with the lighting obtained by the real elements of the scene, it is necessary to modify accordingly the lighting parameters of the virtual element or elements (for example the virtual spotlights).

### 3. Summary.

The purpose of the disclosure is to overcome at least one of these disadvantages of the background art.

More specifically, the purpose of the present disclosure is notably to improve the control of setting parameters of an environment composed from real and virtual objects.

The present disclosure relates to a method for controlling an environment composed from at least one virtual object calculated in real time and at least one real object, the method being implemented in a control device. The method comprises:
- a first display of the composite environment according to an item of information representative of location of the control device;
- a reception of at least one item of information representative of selection of at least one object of the composite environment;
- a reception of at least one item of information representative of a first setting of at least one parameter associated with the at least one selected object.

Advantageously, the at least one selected object is a virtual object, the method further comprising a reception of an item of information representative of a second setting of a parameter associated with at least one real object associated with the at least one selected object, the second setting being dependent on the first setting.

According to a particular characteristic, the first setting and the second setting are applied synchronously to the composite environment.

According to a specific characteristic, the method further comprises a second display of the composite environment subsequent to the first setting.

Advantageously, the at least one selected object is a virtual light source.

According to another characteristics, the method further comprises a rendering of the at least one selected object subsequent to the selection and prior to the first setting, the rendering comprising the rendering of at least one graphical element associated with the at least one selected object, the graphical element being adapted to the setting of the at least one parameter.

The present disclosure also relates to a device for controlling an environment composed from at least one virtual object calculated in real time and from at least one real object, the device comprising:
- a display screen for displaying the composite environment according to an item of information representative of location of the device;
- first interaction means for receiving at least one item of information for selection of at least one object of the composite environment;
- second interaction means for receiving at least one item of information representative of a setting of at least one parameter associated with the at least one selected object.

The present disclosure also relates to a device for controlling an environment composed from at least one virtual object calculated in real time and from at least one real object, the device comprising:
- a display screen for displaying the composite environment according to an item of information representative of location of the device;
- a first interface for receiving at least one item of information representative of selection of at least one object of the composite environment;
- a second interface for receiving at least one item of information representative of a setting of at least one parameter associated with the at least one selected object.

Advantageously, the device further comprises at least one communication interface.

According to a particular characteristic, the first and second interaction means are touch interaction means.

According to a specific characteristic, the at least one selected object is a virtual light source.

The present disclosure also relates to a computer program product comprising program code instructions for executing the steps of the method when this program is executed on a computer.

### 4. List of figures.

The present disclosure will be better understood, and other specific features and advantages will emerge upon reading the following description, the description making reference to the annexed drawings wherein:
- figure 1 shows an environment composed from real and virtual objects, according to a particular embodiment;
- figure 2 shows the environment of figure 1 displayed on a control device, according to a particular embodiment;
- figure 3 shows the control device of figure 2, according to a particular embodiment;
- figure 4 shows a method for controlling the composite environment of figure 1, according to a particular embodiment.

### 5. Detailed description of embodiments.

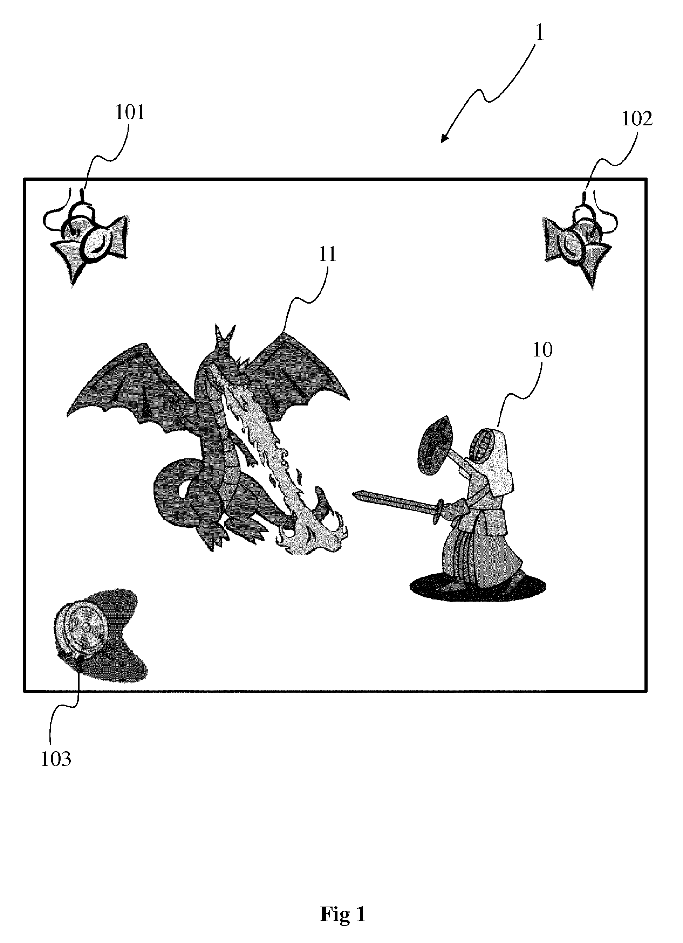

**Figure 1** shows an environment 1 composed from real and virtual objects, according to a particular and non-restrictive embodiment. The environment 1 corresponds for example to a film set for a film or a video sequence as seen by a user (for example the director of the film or the video sequence). The environment 1 advantageously comprises real and/or virtual elements forming the filmed scene and real and/or virtual elements of the scenery and/or of the film set. The environment 1 thus comprises a real object 10 corresponding to an actor playing the role of a knight and a virtual object 11 corresponding to a dragon. The objects 10 and 11 advantageously correspond to the scene of the film or of the video sequence which is the object of the filming. The environment 1 also comprises two real objects 101 and 102 corresponding to spotlights lighting the scene and a third real object 103 corresponding to a device emitting smoke and/or fog. The real objects 101 to 103 belong to the film set and are used to control certain environmental parameters of the scene, notably the lighting. Advantageously, a virtual object is associated with each of the real objects 101, 102 and 103. For example, two virtual spotlights are associated with the spotlights 101 and 102 and a virtual smoke generator is associated with the real smoke generator 103. According to a variant, a virtual object is associated with each real object of only a part of the set of real objects of the film set. For example, no virtual smoke generator is associated with the object 103.

The virtual objects associated with the real objects are for example positioned in the environment 1 at the same positions as the real objects with which they are associated, that is to say the 3D coordinates (in the coordinate system of the environment 1) of a virtual object associated with a real object are identical to the 3D coordinates (in the coordinate system of the environment 1) of this real object. According to a variant, a virtual object associated with a real object is positioned next to the real object with which it is associated. The virtual object 11 is modelled according to any method known to those skilled in the art, for example by polygonal modelling, wherein the model is compared to a set of polygons each defined by the list of vertices and edges that compose it, by NURBS (non-uniform rational basis spline) curve modelling wherein the model is defined by a set of curves created using control points (control vertices), by subdivision surface modelling, etc.

Naturally, the number of virtual objects of the environment 1 is not restricted to one object but extends to any integer greater than or equal to 1 and the number of real objects of the environment 1 is not restricted to four objects but extends to any integer greater than or equal to 1.

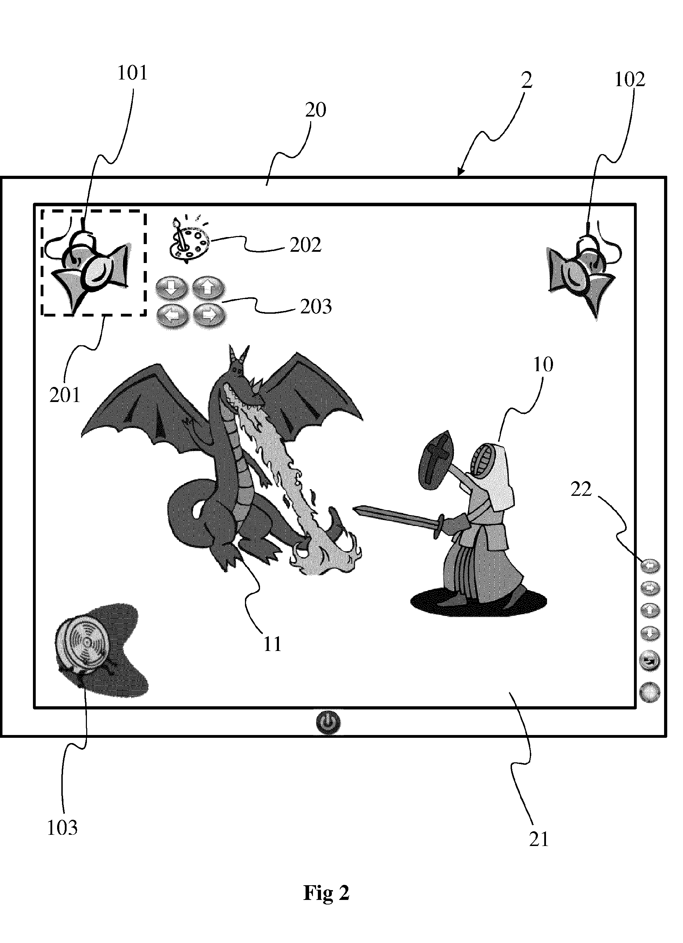

**Figure 2** shows the environment 1 seen via a control device 2, according to a particular and non-restrictive embodiment. When handled by the user (that is to say for example the director of the video sequence comprising images of the objects 10 and 11), the control device 2 enables the user to view the content of the set of real and virtual objects of the environment 1 according to the viewpoint of the user. The control device 2 advantageously comprises a frame 20 surrounding a display screen 21, for example an LCD (liquid crystal display) or OLED (organic light-emitting diode) screen. The rendering of the environment 1 is displayed on the display screen 21, the rendering comprising the real-time composition of the real objects 10, 101, 102 and 103 and of the virtual objects 11. The real objects of the environment 1 are advantageously captured via the intermediary of a video acquisition device associated with the control device 2. The video acquisition device corresponds for example to a webcam incorporated in the control device 2 or to a separate webcam for example coupled by any means to the top of the control device. In this latter case, the webcam is connected to the control device via a wired link (for example of USB or Ethernet type) or via a wireless link (for example of Wifi® or Bluetooth type). The control device 2 is advantageously equipped with real-time locating means for locating the control device 2 in the space of the environment 1 and ensuring viewpoint consistency for the real objects and virtual objects forming the composite environment 1. The locating means correspond for example to markers arranged on the device 2 which make it possible to track the movement (3D position and orientation) using a tracking system of "optiTrack" type. According to other examples, the locating means correspond to a GPS (global positioning system) system plus gyroscope, to an RFID (radio frequency identification) marker or to a UWB (ultra-wideband) marker. According to another example, the control device is located by analysis of a video acquired by a camera filming the movements of the control device 2 in the environment 1. The position and orientation data are provided as input to a 3D software package which controls a virtual camera for the rendering of this virtual camera (which corresponds to the viewpoint of the user who is holding the control device 2). The 3D software is advantageously loaded onto the control device 2 for the real-time rendering of the virtual object 11 to be incorporated into the environment 1. According to a variant, the 3D software is executed on a remote calculation unit connected by any (wired or wireless) link to the control device 2. The rendering data are transmitted in real time to the control device 2 for a real-time display of the virtual object 11 of the environment 1 on the screen 21.

The control device 2 advantageously makes it possible to control and modify the setting parameters associated with the objects, real or virtual, of the environment 1. To modify one or more setting parameters of the object 101, the user starts by selecting the object 101 via any interaction means. The object 101 is selected for example by touch pressure at the position on the screen 21 where the object 101 is displayed, provided that the screen 21 is a touch screen. According to another example, the object 101 is selected by voice command, the object being designated by key words, the correspondence between the voice designation and the object considered being for example stored in the memory of the control device 2 in a look-up table. According to this example, the control device 2 is equipped with a microphone, which may or may not be incorporated in the control device 2. According to another embodiment, the selection is done by gaze, the control device being equipped with a gaze tracking system (for example via the intermediary of an infra-red emitter and an associated camera detecting the position of the gaze on the display screen 21).

Once selected, the object 101 is advantageously highlighted. The object 101 is for example highlighted by a frame 201 (shown by dashed lines). According to a variant, the colour of the object 101 is modified to indicate that the selection has been acknowledged. According to another example, a (graphical or voice) confirmation message is generated to confirm the selection. According to another example, the selection is highlighted by the display of graphical objects 202, 203 making it possible to control certain parameters associated with the object. According to this last example, the confirmation of the selection of the object 101 is not compulsory; simply displaying the graphical objects of the object 101 (nearby or not) is enough to confirm to the user that the object 101 has been selected.

Once the object 101 is selected, the user can then adjust one or more setting parameters associated with the object 101 via any interaction means. According to a first non-restrictive embodiment, one or more graphical objects 202, 203 are generated and superimposed on the display screen 21 to enable the user to modify the parameters which he wishes to modify. The graphical objects 202, 203 are advantageously specific to the selected object as regards their graphical representation, according for example to the modifiable parameters associated with the selected object. With regard to a light source (spotlight) in the case of the object 101, the modifiable parameters of such an object comprise for example colour, light intensity, orientation of the light beam, etc. The graphical object 202 makes it possible for example to modify the settings for colour and/or light intensity of the light beam generated by the light source 101. The graphical object 203 makes it possible for example to move the spotlight (for example rotationally about one or more axes and/or translationally along one or more axes) in order to orient the light beam generated by the light source 101. The setting of the parameters is advantageously done by clicking the screen at the position of the graphical objects. According to a variant embodiment, a value scale representing the setting of the parameter as modified appears on the screen 21 to inform the user of the change of the parameter which he is making. According to another embodiment, the selection of a graphical object 202 or 203 leads to the display of sub-menus enabling the user to choose from among different setting options. According to a variant embodiment, the setting of the parameter or parameters of the selected object is done via the intermediary of buttons 22 positioned on the frame 20 of the control device 2. According to this variant embodiment, the graphical setting objects 202, 203 are not generated. According to an option of this variant, pressing one of the buttons 22 generates the display of a graphical object on the screen corresponding for example to a setting sub-menu for choosing from among different setting options. The user can then navigate this menu by using the arrow buttons 22 or by selecting one or more entries from the menu by touch.

Advantageously, the modification of one or more setting parameters associated with the selected object 101 leads to the modification of corresponding parameters associated with the virtual object associated with the real object 101. Such slaved control of the virtual object associated with the real object 101 by the real object 101 makes it possible to ensure the rendering consistency of the environment 1. With regard to a light source, modifying the lighting of the real object 10 of the scene without accordingly modifying the lighting of the virtual object 11 (via the intermediary of one or more virtual light sources) has a negative visual impact on the unit and the consistency of the environment 1 composed from real and virtual objects. The slaved control of the parameters of the virtual light source or sources associated with the real light source 101 makes it possible to ensure that the lighting (colour and/or intensity and/or orientation of the light beam) of the virtual object 11 remains consistent with the lighting (colour and/or intensity and/or orientation of the light beam) of the real object 10 by the light source 101. According to a variant embodiment, it is the setting of the real object 101 which is slaved to the setting of the associated virtual object. According to this variant, the user selects the virtual object via the control device 2 to modify its parameters as explained above. The parameters of the real object associated with the virtual object and corresponding to the modified parameters of the virtual object are thus in turn modified so as to retain the consistency of the lighting of the environment 1.

According to a variant embodiment, the association of a virtual object with a considered real object is represented by the display of an item of (for example graphic or textual) information associated with the considered real object displayed on the screen 21. This item of information is for example displayed when the user selects the considered object in order to set its parameters or at the request of the user (for example by double-clicking the considered real object). According to another example, this item of information is permanently displayed. In the case where it is the virtual object which is displayed on the screen 21 and not the associated real object, the item of information associated with the displayed virtual object represents the existence of a real object associated with this virtual object.

Naturally, the number of selected objects is not restricted to one object but extends to any number of objects greater than or equal to 1. The selection of several objects whose parameters are to be set is carried out sequentially or simultaneously. The selectable objects are not restricted to the objects of the film set but also comprise the objects 10 and 11 of the scene. The selection of an object of the scene makes it possible for example to modify the rendering (size, texture position) of the object in real time, with regard to a virtual object.

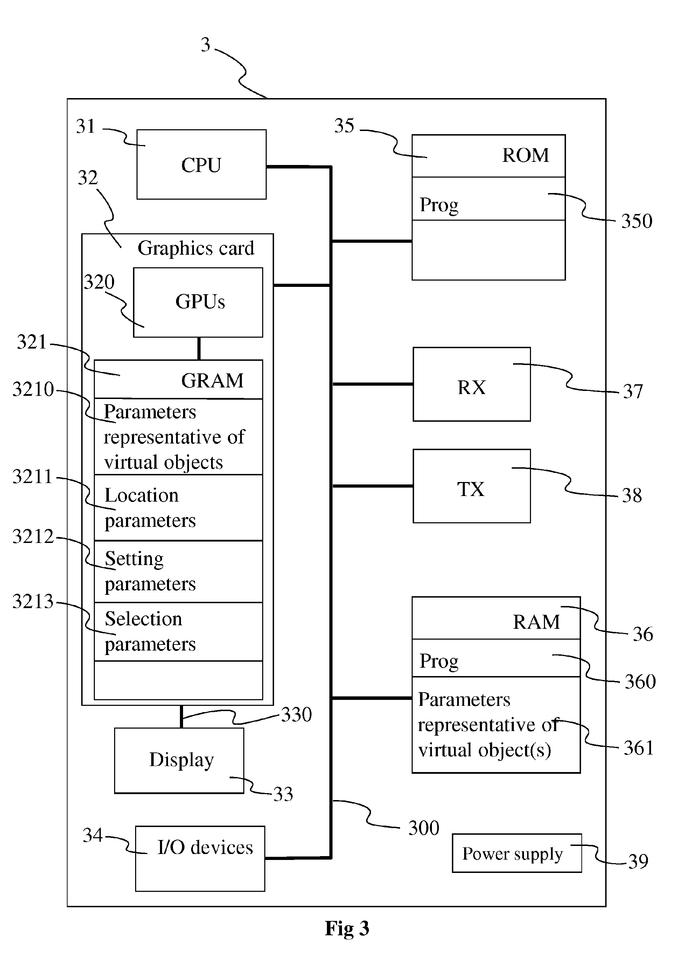

**Figure 3** diagrammatically shows a hardware embodiment of a device 3 (corresponding to the control device 2 of figure 2) adapted to the control of one or more setting parameters associated with one or more (real and/or virtual) objects of the environment 1 and to the creation of signals for displaying one or more images representing the environment 1. The device 3 corresponds for example to a laptop, a tablet or a smartphone.

The device 3 comprises the following elements, connected to each other by an address and data bus 300 which also transports a clock signal:
- a microprocessor 31 (or CPU);
- a graphics card 32 comprising:
   - several graphics processing units 320 (or GPUs);
   - a graphical random access memory (GRAM) 321;
- one or more I/O (input/output) devices 34, such as for example a keyboard, a mouse, a webcam, a microphone, etc.;
- a non-volatile memory of ROM (read only memory) type 35;
- a random access memory (RAM) 36;
- a communication interface RX 37 configured for the reception of data via a wired (for example Ethernet or USB or HDMI type) or wireless (for example Wifi® or Bluetooth type) connection;
- a communication interface 38 configured for the transmission of data via a wired (for example Ethernet or USB or HDMI type) or wireless (for example Wifi® or Bluetooth type) connection;
- a power supply 39.

The device 3 also comprises a display device 33 of display screen type (corresponding for example to the display screen of figure 2) directly connected to the graphics card 32 in order to display notably the rendering of synthesised images (representing the virtual objects of the environment 1) calculated and composed in the graphics card, for example in real time, and the environment 1 composed from the virtual objects and from the real objects acquired by a video acquisition device (for example a webcam). The use of a dedicated bus 330 to connect the display device 33 to the graphics card 32 offers the advantage of having much greater data transmission bitrates and thus reducing the latency time for the display of images composed by the graphics card. According to a variant, a display apparatus is external to the device 3 and is connected to the device 3 by a cable transmitting the display signals. The device 3, for example the graphics card 32, comprises a means for transmission or connector (not shown in figure 3) adapted to transmit a display signal to an external display means such as for example an LCD or plasma screen or a video projector.

It is noted that the word "register" used in the description of memories 32, 35 and 36 designates in each of the memories mentioned a memory zone of low capacity (some binary data) as well as a memory zone of large capacity (enabling storage of a whole program or all or part of the data representative of data calculated or to be displayed).

When switched on, the microprocessor 31 loads and executes the instructions of the program contained in the RAM 36.

The random access memory 36 notably comprises:
- in a register 360, the operating program of the microprocessor 31 responsible for switching on the device 3;
- parameters 361 representative of the virtual objects (for example texture or mesh information) of the environment 1.

The algorithms implementing the steps of the method specific to the invention and described hereafter are stored in the memory GRAM 320 of the graphics card 32 associated with the device 3 implementing these steps. When switched on and once the parameters 360 representative of the virtual objects are loaded into the RAM 36, the graphic processors 320 of the graphics card 32 load these parameters into the GRAM 321 and execute the instructions of these algorithms in the form of microprograms of "shader" type using HLSL (High Level Shader Language) or GLSL (OpenGL Shading Language) for example.

The random access memory GRAM 321 notably comprises:
- in a register 3210, the parameters representative of the virtual objects,
- parameters for locating (3D coordinates and orientation) 3211 the device 3;
- parameters 3212 representative of the settings associated with the selected objects and/or associated with the real (respectively virtual) objects associated with the selected virtual (respectively real) objects;
- parameters 3213 representative of the selected object or objects.

According to a variant, a part of the RAM 36 is assigned by the CPU 31 for storage of the parameters 3211 and 3212 if the memory storage space available in GRAM 321 is insufficient. However, this variant causes greater latency time in the composition of an image representing the environment 1 composed from microprograms contained in the GPUs as the data must be transmitted from the graphics card to the random access memory 36 passing via the bus 300 whose transmission capacities are generally lower than those available in the graphics card to transfer the data from the GPUs to the GRAM and vice-versa.

According to another variant, the data associated with the rendering of the virtual object or objects of the environment 1 are received via the intermediary of the communication interface 37, these data being for example transmitted by a remote calculation unit configured for the rendering of the virtual objects. According to this variant, data representative of the location parameters (stored for example in the RAM 36 according to this variant) are transmitted to the remote calculation unit in charge of the rendering of the virtual objects via the intermediary of the communication interface 38. According to this variant, only the final composition of the environment 1 is carried out by control device 2 via the intermediary of programs adapted for this purpose.

According to another variant, the power supply 39 is external to the device 6.

According to another variant, the device 3 takes for example the form of a programmable logic circuit of FPGA (field-programmable gate array) type for example, an ASIC (application-specific integrated circuit) or a DSP (digital signal processor).

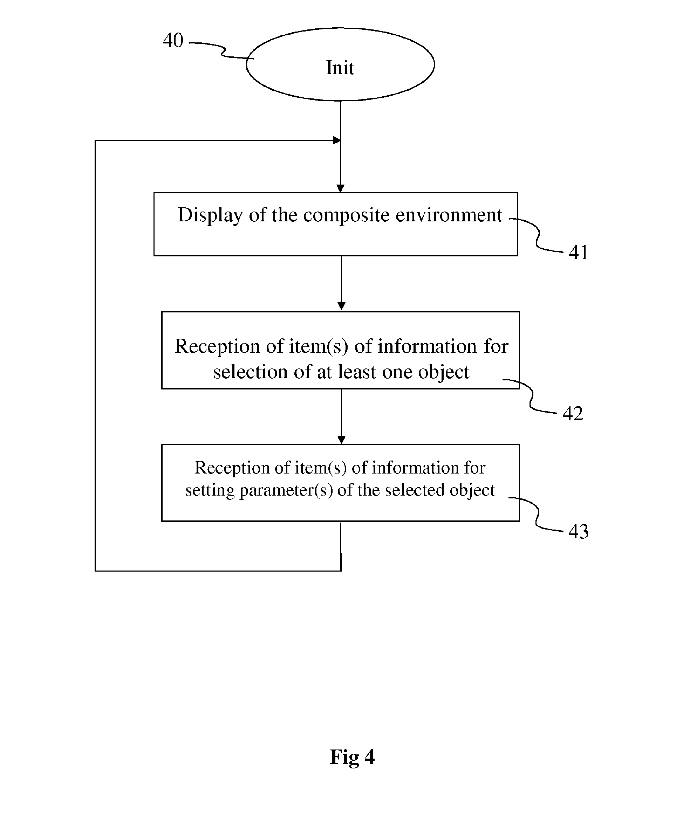

**Figure 4** shows a method for controlling the composite environment 1 implemented in a device 3, according to a particular and non-restrictive embodiment.

During an initialisation step 40, the different parameters of the device 3 are updated and initialised in any way.

Then, during a step 41, the environment composed from one or more real objects and from one or more virtual objects is displayed on a display screen of the device. The viewpoint consistency between the objects of the real world and the objects of the virtual world is ensured by the location of the control device, the location data being used to determine the viewpoint of the objects of the virtual world. The location data are advantageously determined by the control device, for example when the position and the orientation of the control device are calculated using data from a GPS and from a gyroscope incorporated in the control device. According to a variant, the location data are determined by a unit different from the control device, for example when it is a matter of determining the position and the orientation of the control device using an RFID or UWB marker incorporated in the control device or by analysis of a video of the movement of the control device in the environment 1.

Then, during a step 42, the control device receives one or more items of information representative of the selected object or objects of the environment 1. The entering of the selection of the object or objects is done via the intermediary of first interaction means, that is to say for example by touch, by voice command, by detection of the position of the gaze of the user on the display screen of the control device or by any other means known to those skilled in the art. The selected object or objects correspond to one or more virtual objects and/or one or more real objects of the environment 1 displayed on the display screen.

Finally, during a step 43, the control device receives one or more items of information representative of a first setting of one or more parameters associated with the selected object or objects. The entry of the setting commands is done via the intermediary of second interaction means (for example via the intermediary of the display of a menu of selectable objects or via the intermediary of setting buttons positioned on the frame of the control device or by voice command, etc.). The parameter or parameters may or may not be specific to the type of object selected.

Advantageously but optionally, the method comprises a second setting of one or more parameters associated with a (real or virtual) object itself associated with the selected (respectively virtual or real) object, the second setting being dependent on the first setting in order to retain the consistency between the real and virtual parts of the environment 1. According to this variant, the first and second settings are applied synchronously to the environment. According to another variant, the application of the first setting is prior to the application of the second setting.

According to a variant, the method further comprises a second display of the composite environment subsequent to the application of the first setting to the selected object so that the user can be aware of the result of the modification of the setting parameter or parameters. In the case of a second setting dependent on the first setting, this variant advantageously provides for the second display to be performed after the first and second settings have been taken into account.

According to another variant, the method further comprises a rendering of the selected object or objects which is performed subsequent (from a temporal viewpoint) to the selection of the object or objects and prior (from a temporal viewpoint) to the first setting. The rendering advantageously comprises the rendering of at least one graphical element associated with the selected object or objects, the graphical element being adapted to the setting of the setting parameter or parameters associated with the selected object or objects.

Naturally, the present disclosure is not limited to the embodiments previously described.

In particular, the present disclosure is not limited to a method for controlling an environment composed of real and virtual objects but also extends to the GUI (graphical user interface) making it possible to set the parameters associated with the objects of the environment. The present disclosure also extends to the device implementing such a method and to the multimedia terminal implementing such a method.

The embodiments previously described are for example implemented in a method or a process, an apparatus, a software program, a data stream or a signal. A device or apparatus implementing the configuration parameters setting method described is for example implemented in the form of hardware components, programmable or not, in the form of one or more processors (advantageously of CPU type but also of GPU or ARM type according to variants). The methods described are implemented for example in an apparatus comprising at least one processor, which refers to processing devices in general, comprising for example a computer, a microprocessor, an integrated circuit or a programmable logic device. Processors also comprise communication devices, such as for example computers, mobile or cellular telephones, smartphones, portable/personal digital assistants (PDAs), digital tablets or any other device enabling the communication of information between users.

Moreover, the methods described can be implemented in the form of instructions executed by one or more processors, and such instructions can be stored on a medium that can be read by a processor or computer, such as for example an integrated circuit, any storage device such as a hard disc, an optical disc (CD or DVD), a random access memory (RAM) or a non-volatile memory (ROM). The instructions form for example an application program stored in a processor-readable medium. The instructions take for example the form of hardware, firmware or software.

## Claims

1. Device for controlling (2) a composite environment (1) composed from at least one virtual object (11) calculated in real time and from at least one real object (10, 101, 102, 103), **characterised in that** the device comprises:
- a display screen (21) for displaying the composite environment (1) according to an item of information representative of location of said device (2);
- first interaction means for receiving at least one item of information for selection of at least one real object (101) of the composite environment;
- second interaction means (202, 203, 22) for receiving at least one item of information representative of a first setting of at least one parameter associated with said at least one selected real object (101) and at least one item of information representative of a second setting of a parameter associated with at least one virtual object associated with said at least one selected real object (101), said second setting being dependent on said first setting.

2. Device according to claim 1 further comprising at least one communication interface (37, 38).

3. Device according to one of claims 1 to 2, wherein the first and second interaction means are touch interaction means.

4. Device according to claim 1, wherein the at least one selected object is a real light source.

5. Device according to one of claims 1 to 4, wherein the display screen (21) is configured to display at least one graphical object following a selection of the at least one real object, said at least one graphical object being adapted to set said at least one parameter associated with said at least one real object (101).

6. Device according to one of claims 1 to 5, wherein the display screen is configured to display the composite environment (1) following the reception of the item of information representative of the first and second settings.

7. Device according to one of claims 1 to 6 further comprising means for rendering said at least one selected object subsequent to said selection and prior to said first setting, the rendering comprising rendering at least one graphical element (202, 203) associated with said at least one selected real object (101), said graphical element being adapted to the first setting of said at least one parameter.

8. Method for controlling a composite environment (1) composed from at least one virtual object (11) calculated in real time and from at least one real object (10, 101, 102, 103), said method being implemented in a control device (2), **characterised in that** the method comprises:
- first displaying (41) the composite environment (1) according to an item of information representative of location of said control device (2);
- receiving (42) at least one item of information for selection of at least one real object (101) of the composite environment;
- receiving (43) at least one item of information representative of a first setting of at least one parameter associated with said at least one selected object (101);
- receiving an item of information representative of a second setting of a parameter associated with at least one virtual object associated with said at least one selected real object (101), said second setting being dependent on said first setting.

9. Method according to claim 8, further comprising displaying at least one graphical object following the selection of the at least one real object adapted to the setting of said at least one parameter associated with said at least one real object (101).

10. Method according to one of claims 8 and 9, wherein the first setting and the second setting are applied synchronously to the composite environment (1).

11. Method according to one of claims 8 to 10 further comprising a second displaying of the composite environment (1) subsequent to said first setting.

12. Method according to one of claims 8 to 11, wherein said at least one selected object is a real light source.

13. Method according to one of claims 8 to 12 further comprising rendering said at least one selected object subsequent to said selection and prior to said first setting, the rendering comprising rendering at least one graphical element (202, 203) associated with said at least one selected object (101), said graphical element being adapted to the setting of said at least one parameter.

14. Computer program product, **characterised in that** it comprises program code instructions for executing the steps of the method according to any one of claims 8 to 13, when said program is executed on a computer.
